# EUROPÄISCHE PATENTSCHRIFT

(11) **EP 3 528 995 B1**
(45) Veröffentlichungstag und Bekanntmachung des Hinweises auf die Patenterteilung: **07.12.2022**
(21) Anmeldenummer: 17798107.3
(22) Anmeldetag: 20.10.2017
(51) Int. Cl.: B23K 26/38, B23K 26/04

(54) **VERFAHREN ZUM SCHNEIDEN EINES WERKSTÜCKS MITTELS EINES LASERSTRAHLS**
LASER CUTTING METHOD
MÉTHODE DE DÉCOUPE AU LASER

(30) Priorität: 24.10.2016 DE 102016220807
(43) Veröffentlichungstag der Anmeldung: 28.08.2019
(73) Patentinhaber: Trumpf Werkzeugmaschinen GmbH + Co. KG, 71254 Ditzingen (DE)
(72) Erfinder: MACH, Patrick, 71384 Weinstadt (DE); KRUTZKE, Michael, 71069 Sindelfingen (DE); WADEHN, Wolf, Plainville, CT 06062 (US); BURDE, Yannic, 71277 Rutesheim (DE); KRAUS, Christoph, 71272 Renningen (DE); WEEBER, Julian, 74542 Braunsbach (DE)
(74) Vertreter: Kohler Schmid Möbus Patentanwälte
(86) Internationale Anmeldenummer: PCT/EP2017/076923
(87) Internationale Veröffentlichungsnummer: WO 2018/077762

(56) Entgegenhaltungen:
- DE-A1- 10 218 469
- JP-A- H1 085 975
- JP-A- H07 195 186
- US-A- 5 607 606

## Beschreibung

Die Erfindung geht aus von einem Verfahren zum Schneiden eines, vorzugsweise plattenförmigen und/oder metallischen, Werkstücks entlang einer vorgebbaren Scheidkontur mittels eines Laserstrahls und eines aus einer Düse austretenden Schneidgases, wobei der Laserstrahl in das Werkstück zur Ausbildung eines Einstichlochs zumindest teilweise neben der Schneidkontur einsticht.

Im Stand der Technik wird bei bisher üblichen Verfahren zum Laserschneiden beispielsweise plattenförmiger Werkstücke nach dem Einstechen des Laserstrahls in das Werkstück eine der eigentlichen Schneidkontur vorauslaufende Anfahrstrecke benötigt. Sie wird benötigt, da beim Einstechen ein Materialauswurf um das Einstichloch herum entsteht. Zudem würde die Schneidkontur verletzt, wenn direkt auf dieser eingestochen würde. Ferner müssen spätestens zu Beginn des eigentlichen Schnitts entlang der Schneidkontur jeweils erforderliche Schneidparameter eingestellt werden. Schneidparameter sind beispielsweise der Abstand der Düse vom Werkstück, Fokuslage des Lasers etc.

Ein gattungsgemäßes Verfahren ist aus der US 5,770,833 A1 bekannt. Insbesondere wird ein Verfahren zum Einstechen eines Laserstrahls in ein Werkstück beschrieben, bei dem geringfügig neben dem eigentlichen Einstichloch mit dem Einstechen begonnen und beim Hinfahren zum Einstichloch der Abstand zwischen Düse und Werkstück kontinuierlich gesenkt wird.

Aus der JPH 07195186 A sowie der US 2007/170157 A1 ist es ferner bekannt, zum Schneiden spitzer Ecken Schneidparameter vor und nach einer Ecke der Schneidkontur kontinuierlich zu ändern.

Aus der US 5,444,211 A ist es bekannt, bei Erreichen zweier verschiedener Punkte A und B der Werkstückoberfläche Schneidparameter umzuschalten bzw. zu wechseln.

Aus der JP 60240393 A ist es bekannt, einen Laserstrahl auf ein Werkstück zu richten und das Material des Werkstücks bis nahe seiner Schmelztemperatur zu erwärmen. Dann wird eine Düse Richtung Werkstück bewegt, wodurch ein Einstechen erfolgt.

Ein weiteres Verfahren zur Bearbeitung eines Werkstücks, welches die Basis für den Oberbegriff des Anspruchs 1 bildet, ist aus der JP H10 85975 A bekannt.

Eine Laserschneidemaschine ist in der US 5 607 606 A offenbart.

Ferner ist ein Laser-Durchbohrungsverfahren aus der DE 102 18 469 A1 bekannt.

Insbesondere durch die Anfahrstrecke erhöht sich die Laserschneidzeit von Werkstücken bzw. -teilen teilweise um bis zu 20 %.

Der vorliegenden Erfindung stellt sich daher die Aufgabe, ein Verfahren bereit zu stellen, mit dem beim Laserschneiden eines Werkstücks die Prozessgeschwindigkeit gesteigert werden kann.

Die Aufgabe wird gelöst durch ein Verfahren mit den Merkmalen gemäß Patentanspruch 1.

Erfindungsgemäß wird somit, insbesondere beim Einfahren in die eigentliche Schneidkontur, nicht "hart" zwischen verschiedenen ParameterWerten eines Bearbeitungsparameters umgeschaltet. Insbesondere kann eine "harte" Umstellung des Bearbeitungsparameters an einem Anfangspunkt der eigentlichen Schneidkontur oder am Ende der Ausbildung des Einstichlochs vermieden werden. Vielmehr werden Bearbeitungsparameter auf der Umschaltstrecke kontinuierlich verändert. Somit kann die Zeit, die üblicherweise zum Umschalten der Bearbeitungsparameter zwischen Einstechparameter-Werten und Schneidparameter-Werten benötigt wird, produktiv nutzbar gemacht werden, wohingegen im Stand der Technik während dieser Zeit beispielsweise ein Schneidkopf bzw. der Laserstrahl der Laserschneidmaschine still steht.

Die Umschaltstrecke kann direkt am Einstichloch beginnen, alternativ kann sie jedoch auch vom Einstichloch beabstandet beginnen. Die Umschaltstrecke reicht ferner bis in die Schneidkontur hinein, so dass der Abstand des Einstichlochs von der Schneidkontur klein gehalten werden kann.

Es kann vorgesehen sein, Einstechparameter-Werte auszuwählen, die einen möglichst geringen Materialaufwurf während des Einstechens um das Einstichloch herum erzeugen. Insbesondere kann vorgesehen sein, dass der Einstich materialaufwurf-frei erfolgt. So kann vermieden werden, dass sich beispielsweise Schmelze-Spritzer auf der Oberfläche des Werkstücks, insbesondere in Bereichen eines zu produzierenden Gutteils, festsetzen. Beim Aufwurf-freien Einstechen muss das Einstichloch nicht von der Schneidkontur beabstandet sein, sondern kann auf der Schneidkontur liegen.

Beispielsweise kann das Einstechen erfolgen, indem zunächst ein Teileinstich durchgeführt wird, dann ein sich ergebender Materialaufwurf, vorzugsweise mittels des Schneidgases, weggeblasen wird, und anschließend ein vollständiger Durchstich im zu bildenden Einstichloch erfolgt.

In einer besonders vorteilhaften Variante der Erfindung kann vorgesehen sein, dass die Bearbeitungsparameter linear geändert werden. Beispielsweise kann der Abstand Düse-Werkstück dadurch auf besonders einfache Weise linear geändert werden, dass die Düse bzw. der Schneidkopf, an dem die Düse angeordnet ist, mit konstanter Geschwindigkeit dem Werkstück angenähert wird.

In einer weiteren besonders vorteilhaften Variante des erfindungsgemäßen Verfahrens kann vorgesehen sein, dass der Abstand Düse-Werkstück während des Einstechens und/oder auf der Umschaltstrecke verringert wird. Mit anderen Worten kann vorgesehen sein, dass die Düse dem Werkstück während des Einstechens und/oder auf der Umschaltstrecke angenähert wird. Durch eine Verringerung des Abstandes zwischen Düse und Werkstück kann das Schneidgas verbessert in den Schnittspalt eingeleitet werden.

Auch kann vorgesehen sein, dass die Schneidgeschwindigkeit auf der Umschaltstrecke erhöht wird. Somit kann bereits die Umschaltstrecke genutzt werden, um die Schneidgeschwindigkeit beispielsweise auf eine während des eigentlichen Schneidprozesses gewünschte Endgeschwindigkeit zu beschleunigen.

Außerdem kann vorgesehen sein, dass die Fokuslage des Laserstrahls während des Einstechens relativ zu der Düse in Richtung Werkstück, bei vertikal ausgerichtetem Laserstrahl somit nach unten, verstellt wird. Durch Änderung der Fokuslage kann sowohl eine Fokusdrift, beispielsweise durch Erwärmung optischer Elemente im Schneidkopf, kompensiert als auch die Ausbildung des Schnittspaltes, vorzugsweise aus dem Einstichloch heraus, verbessert werden. Ein Schnittabriss kann vermieden werden.

Ebenso kann vorgesehen sein, dass die Laserleistung und/oder der Druck des Schneidgases während des Einstechens und/oder auf der Umschaltstrecke erhöht wird. Auf diese Weise kann vermieden werden, dass zu Beginn des Einstechens durch eine zu hohe Laserleistung und/oder durch den Gasdruck Spritzer in Richtung der Bearbeitungsoptik geschleudert werden. Im Verlauf des Einstechens und/oder auf der Umschaltstrecke können die Laserleistung und/oder der Gasdruck auf einen für den Schneidprozess geeigneten Wert erhöht werden.

Vorzugsweise können die Bearbeitungsparameter Abstand Düse-Werkstück, Fokuslage, Fokusdurchmesser, Laserleistung, Gasdruck und/oder Schneidgeschwindigkeit während des Einstechens oder auf einer Strecke von ca. 5mm synchron angepasst werden. So kann die Schneidgeschwindigkeit nach dem Einstechen innerhalb einer Strecke von 5mm auf den gewünschten Schneidgeschwindigkeits-Endwert erhöht werden, der Abstand Düse-Werkstück kontinuierlich und die Fokuslage auf die jeweils gewünschten Endwerte gesenkt werden, sowie Gasdruck und Laserleistung erhöht werden. Nachdem die Endwerte erreicht sind, kann die Schneidkontur mit diesen Schneidparametern zu Ende geschnitten werden. In alternativen Varianten des Verfahrens können einzelne Bearbeitungsparameter, wie zum Beispiel der Gasdruck, nicht kontinuierlich geändert sondern am Ende des Einstechens oder zu Beginn oder am Ende der Umschaltstrecke diskret umgeschaltet werden. Auch kann vorgesehen sein, bestimmte Bearbeitungsparameter während der Ausbildung des Einstichlochs und andere auf der Umschaltstrecke zu ändern.

Besonders bevorzugt ist es, wenn bei einem nicht völlig Aufwurf-freiem Einstichprozess der Abstand des Einstichlochs zur Schneidkontur etwa einer Schnittspaltbreite entspricht. Allgemein kann der Einstich in geringem Abstand zur Schneidkontur, vorzugsweise im an die Schneidkontur angrenzenden Restgitter oder in einem Butzen, d. h. dem Abfall- bzw. Verschnittbereich des Werkstücks, erfolgen.

Wenn die Breite des Abstandes zur Schneidkontur in etwa einer Schnittspaltbreite entspricht, kann verhindert werden, dass aufgrund des Durchmessers des Einstichlochs die Schneidkontur entlang dem dem Restgitter benachbarten Gutteil bzw. auf dem Gutteil verletzt wird. Beispielsweise kann der Einstich weniger als 1 mm, vorzugsweise ca. 0,4 mm, neben der Schneidkontur erfolgen.

Bei einer Weiterbildung des erfindungsgemäßen Verfahrens kann vorgesehen werden, dass nach dem Einstechen und vor dem Anfahren aus dem Einstichloch Bearbeitungsparameter geändert werden, z.B. der Abstand Düse-Werkstück vergrößert und die Fokuslage vom Werkstück in Richtung Düse, d. h. bei vertikal ausgerichtetem Laserstrahl nach oben, verstellt wird.

Es kann somit mehrschrittig verfahren werden. Zunächst kann mit einem geringfügigen Abstand, beispielweise in etwa einer Schnittspaltbreite entsprechend, zur eigentlichen Schneidkontur in das Werkstück eingestochen werden. Der Einstich kann dabei materialaufwurf-arm erfolgen. In einem nächsten Schritt können als Anfahr-Parameter ein größerer Düsenabstand und eine höhere Fokuslage bei stehendem Schneidkopf, vorzugsweise bei ausgeschaltetem Laserstrahl, eingestellt werden sowie der Gasdruck des Schneidgases erhöht werden. Anschließend kann dann der Laserstrahl eingeschaltet und mit einer geringen Geschwindigkeit aus dem Einstichloch in die Schneidkontur hineingefahren bzw. hineingelenkt werden. Anschließend können dann die jeweiligen gewünschten Endwerte (Schneidwerte) der Bearbeitungsparameter linear eingestellt werden, mit denen dann entlang der restlichen Schneidkontur geschnitten werden kann.

Durch den vorzugsweise unmittelbar neben der Gutteil-Schneidkontur durchgeführten Einstich und den weitgehenden Wegfall einer Anfahrstrecke kann die Laserschneidzeit der Gutteile reduziert, teilweise sogar um bis zu 20 % reduziert, werden. Zusätzlich können mehrere zu produzierende Gutteile enger auf einer Werkstücktafel angeordnet werden, wodurch sich eine erhebliche Materialersparnis erreichen lässt.

Weitere Merkmale und Vorteile der Erfindung ergeben sich aus der nachfolgenden detaillierten Beschreibung von Varianten des erfindungsgemäßen Verfahrens sowie von Ausführungsbeispielen einer zur Ausführung des Verfahrens geeigneten Laserschneidmaschine anhand der Figuren der Zeichnung, die erfindungswesentliche Einzelheiten zeigen, sowie aus den Ansprüchen.

In der schematischen Zeichnung sind Ausführungsbeispiele der Erfindung dargestellt, welche in der nachfolgenden Beschreibung näher erläutert werden.

Es zeigen:
- Figur 1: eine Laserschneidmaschine gemäß der Erfindung;
- Figur 2: eine Aufsicht auf ein zu schneidendes Werkstück mit Schneidkontur und Einstichloch;
- Figur 3: eine schematische Darstellung eines Strahlweges mit Einstichloch und Umschaltstrecke;
- Figur 4: eine schematische Darstellung des erfindungsgemäßen Verfahrens.

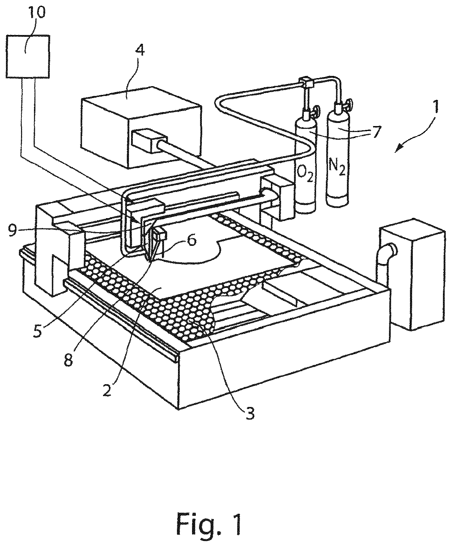

Figur 1 zeigt eine Laserschneidmaschine 1 zum Laserschneiden eines Werkstücks 2, das auf einer Werkstückauflage 3 angeordnet ist. Die Laserschneidmaschine 1 weist einen Laserstrahlerzeuger 4 auf, der in diesem Ausführungsbeispiel als Diodenlaser ausgebildet ist. In alternativen Ausführungsformen ist vorgesehen, den Laserstrahlerzeuger 4 als CO₂-Laser oder Festkörperlaser auszubilden. Weiter ist der Figur 1 ein Schneidkopf 5 zu entnehmen. Im Laserstrahlerzeuger 4 wird ein Laserstrahl 6 erzeugt, der mittels Lichtleitung oder Umlenkspiegeln vom Laserstrahlerzeuger 4 zum Schneidkopf 5 geführt wird. Der Laserstrahl 6 wird mittels einer im Schneidkopf 5 angeordneten Fokussieroptik auf das Werkstück 2 gerichtet.

Die Laserschneidmaschine 1 wird darüber hinaus mit Schneidgasen 7, in diesem Ausführungsbeispiel Sauerstoff und Stickstoff, versorgt. Die Schneidgase 7 gelangen in eine Düse (Schneidgasdüse) 8 des Schneidkopfs 5, aus der sie zusammen mit dem Laserstrahl 6 austreten. Die Laserschneidmaschine 1 umfasst des Weiteren optische Elemente, beispielsweise adaptive Optiken 9 oder mehrere Linsen einer Zoom-Optik, mit denen Fokuslage und Fokusdurchmesser des Laserstrahls 6 variiert bzw. eingestellt werden können. Ferner weist die Laserschneidmaschine 1 eine Maschinensteuerung 10 auf. Die Maschinensteuerung 10 ist eingerichtet, sowohl den Schneidkopf 5 mitsamt der Schneidgasdüse 8 relativ zum Werkstück 2 zu verfahren als auch die Optik 9 anzusteuern. Somit ist die Maschinensteuerung 10 eingerichtet, Bearbeitungsparameter der Laserschneidmaschine 1, insbesondere Fokuslage des Laserstrahls 6, Abstand Düse-Werkstück als auch Schneidgeschwindigkeit des Laserstrahls bzw. Verfahrgeschwindigkeit und Orte des Schneidkopfes 5 sowie die Intensität des Laserstrahls 6 und den Gasdruck der Schneidgase 7 zu steuern.

Insbesondere ist die Maschinensteuerung 10 eingerichtet, das im Folgenden näher beschriebene erfindungsgemäße Verfahren auf der Laserschneidmaschine 1 auszuführen. Dazu ist die Maschinensteuerung 10 eingerichtet, während des Einstechens des Laserstrahls 6 in das Werkstück 2 und/oder auf einer Umschaltstrecke mindestens einen Bearbeitungsparameter kontinuierlich zu verändern. Die Umschaltstrecke erstreckt sich dazu auf dem zu schneidenden Werkstück 2 zwischen einem durch den Laserstrahl 6 erzeugten Einstichloch und einem auf einer vorgebbaren Schneidkontur liegenden Punkt des Werkstücks 2.

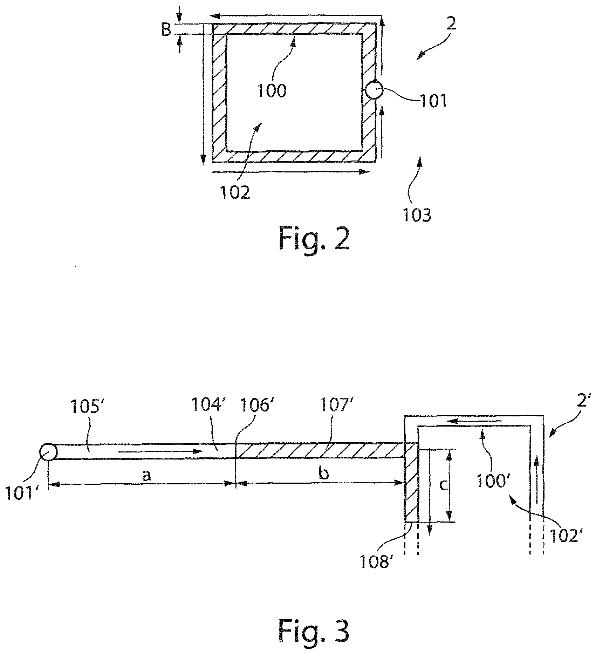

Die Figur 2 zeigt nun das Werkstück 2 der Figur 1 in Aufsicht. Schematisch dargestellt ist eine Schneidkontur 100, entlang derer das Werkstück 2 geschnitten werden soll. Weiterhin ist ein Einstichloch 101 des Laserstrahls zu erkennen.

Die Schneidkontur 100 umschließt einen Gutteilbereich 102. Außenseitig der Kontur 100 grenzt ein Restgitterbereich 103 an. Der Restgitterbereich 103 kann als Verschnittbereich dienen und/oder - insbesondere mit größerem Abstand zur Schneidkontur 100 - zur Fertigung weiterer Gutteilbereiche 102.

Der Figur 2 ist insbesondere zu entnehmen, dass der Einstich direkt neben der eigentlichen Schneidkontur 100 erfolgt. Das Einstichloch 101 befindet sich somit im Restgitterbereich 103, wobei der Abstand des Einstichlochs 101 zur Schneidkontur 100 in etwa einer Schnittspaltbreite B entspricht. Somit erreicht das Einstichloch 101 nicht die dem Gutteilbereich 102 zugewandte Seite der Schnittkontur 100. Auswirkungen des Einstichs auf den Gutteilbereich 102 werden somit minimiert. Bei Aufwurf-freiem Einstich und/oder einem Fokusdurchmesser des Laserstrahls 6, der deutlich kleiner ist als die Schnittspaltbreite B, kann das Einstichloch 101 auch auf bzw. innerhalb der Schneidkontur 100 angeordnet sein.

In der Figur 3 ist nun schematisch vergrößert eine Wegstrecke 104' eines Laserstrahls auf einem Werkstück 2' dargestellt.

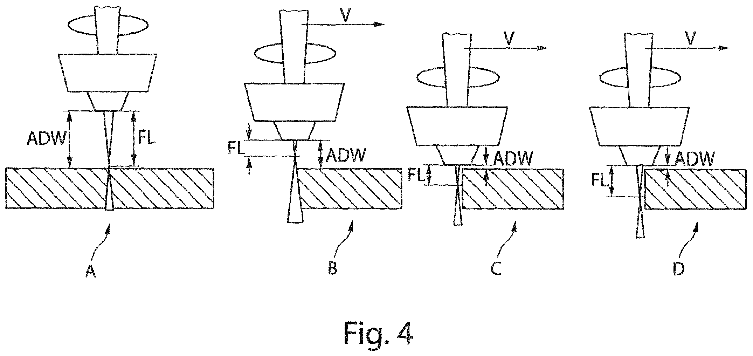

Zu erkennen ist wiederum ein Einstichloch 101', von dem aus der Laserstrahl entlang der Wegstrecke 104' geführt wird. Zunächst überstreicht der Laser eine Anfahrstrecke 105', in diesem Ausführungsbeispiel mit einer Länge a von 0,2mm. An der Anfangsposition 106' beginnt eine Umschaltstrecke 107'. Die Umschaltstrecke 107' reicht dabei insbesondere in eine Schneidkontur 100' bis zur Endposition 108' hinein. Die Schneidkontur 100' grenzt einen Gutteilbereich 102', d. h. das zu fertigende Werkstückteil, ab. Außerhalb der Schneidkontur 100' beträgt in diesem Ausführungsbeispiel die Länge der Umschaltstrecke b 0,2mm. Auf der Schneidkontur 100' weist die Umschaltstrecke eine Länge c von 4,8mm auf. Erfindungsgemäß werden entlang der Umschaltstrecke 107' Schneidparameter wie im Folgenden anhand der Figur 4 näher erläutert wird, kontinuierlich verändert.

Die Figur 4 zeigt dazu schematisch vier Verfahrensschritte A, B, C, D einer Variante des erfindungsgemäßen Verfahrens.

Beispielhaft wird davon ausgegangen, dass das zu schneidende Werkstück 2' (Figur 3) aus 8mm dickem Edelstahl gebildet ist und auf der Laserschneidmaschine 1 der Figur 1 geschnitten werden soll. Die Laserschneidmaschine 1 ist in diesem Beispiel als 2D-Laserflachbettmaschine ausgebildet und wird zur Durchführung von Schmelzschnitten mit Stickstoff als Schneidgas betrieben.

Im ersten Verfahrensschritt A erfolgt ein Einstich aufwurffrei in einem lateralen Abstand von a+ b (Figur 3) von 0,4mm zur gewünschten Gutteil-Schneidkontur 100' (Figur 3). Der vertikale Abstand der Schneidgasdüse 8 zum Werkstück 2', d. h. der Abstand Düse-Werkstück, ADW, beträgt in diesem Verfahrensschritt A in diesem Beispiel 10mm. Die Fokuslage FL relativ zur Mündung der Schneidgasdüse 8 gemessen beträgt in diesem Ausführungsbeispiel -10mm. Mit anderen Worten liegt der Fokus des Laserstrahls 6 auf der Werkstückoberfläche des Werkstücks 2'. Der Gasdruck beträgt 2 bar und die Laserleistung 1500 W (mittlere Leistung).

Im folgenden Verfahrensschritt B erfolgt ein Anfahren aus dem Einstichloch 101' (Figur 3). Dazu wird nach Abschluss des Verfahrensschritts A der Abstand Düse-Werkstück ADW auf 4mm eingestellt. Die Fokuslage FL wird auf -2,5mm eingestellt. Somit liegt die Fokuslage FL oberhalb des Werkstücks 2, d.h. zwischen dem Schneidkopf 5 (Figur 1) und der Oberfläche des Werkstücks 2'. Der Gasdruck wird auf 18 bar erhöht. Der Schneidkopf 5 bzw. der Laserstrahl 6 (Figur 1) werden mit diesen Anfahrparametern relativ zum Werkstück 2' mit einer Vorschub- bzw. Schneidgeschwindigkeit v von 1,8m pro Minute entlang der Anfahrstrecke 105' bewegt. Für die Anfahrparameter werden Werte gewählt, die einen guten Schnittbeginn sicherstellen. Je nach Materialart und -stärke des Werkstücks 2 kann der Schneidprozess jedoch auch mit Einstichparametern begonnen werden und die Anfahrstrecke 105' sowie der Verfahrensschritt B können entfallen.

Der anschließende Verfahrensschritt C beginnt mit Erreichen der Umschaltstrecke 107' (Figur 3), d. h. mit Erreichen der Anfangsposition 106', oder - bei Wegfall des Verfahrensschritts B - direkt am Einstichloch 101' (Figur 3).

In der hier dargestellten Verfahrensvariante beträgt die Länge b+c (Figur 3) der Umschaltstrecke 107' insgesamt 5mm.

Während der Laserstrahl 6 entlang der Umschaltstrecke 107' bewegt wird, wird mindestens ein Bearbeitungsparameter kontinuierlich und linear soweit verändert, dass er für den Schnitt entlang der Schneidkontur 100' einen gewünschten Endwert (Schneidparameter) erreicht.

Insbesondere wird der Abstand Düse-Werkstück ADW zur besseren Einkopplung des Schneidgases in den Schnittspalt von 4mm linear auf 1mm reduziert.

Die Fokuslage FL wird von -2,5mm auf -6,5mm ebenfalls linear abgesenkt, um einer thermisch bedingten Fokusverschiebung kompensierend entgegenzuwirken.

Die Vorschub- bzw. Schneidgeschwindigkeit v wird von 1,8m pro Minute auf 2,8m pro Minute erhöht.

Erreicht der Laserstrahl das Ende der Umschaltstrecke 107' (Figur 3), mit anderen Worten, erreicht der Laserstrahl die Endposition 108' (Figur 3), sind alle für den Schnitt entlang der Schneidkontur 100' gewünschten Bearbeitungsparameter-Endwerte (Schneidparameter-Werte) erreicht.

Somit erfolgt im letzten Verfahrensschritt D ein Schnitt der restlichen Schneidkontur mit gemäß den gewünschten Endwerten eingestellten Bearbeitungsparametern (Schneidparametern). Insbesondere beträgt im Verfahrensschritt D der Abstand Düse-Werkstück ADW 1mm, die Fokuslage -6,5mm und die Vorschub-Schneidgeschwindigkeit v 2,8m pro Minute bei einem Schneidgasdruck von 18bar.

Somit erfolgt, insbesondere in Verfahrensschritt C, eine kontinuierliche Anpassung der Bearbeitungsparameter entlang der Umschaltstrecke 107'. Ein Stillstand des Bearbeitungskopfs 5 beim Einfahren in die Schneidkontur 100, 100' zum diskreten Umschalten von Bearbeitungsparametern entfällt. In einer vorteilhaften Verfahrensvariante entfällt auch die Anfahrstrecke 105', d.h. nach dem Losfahren des Bearbeitungskopfs 5 aus dem Einstichloch 101' beginnt sofort die kontinuierliche Änderung der Bearbeitungsparameter. Auf diese Weise wird die bis zum Erreichen der endgültigen Schneidparameter benötigte Zeitdauer und Wegstrecke minimiert.

Durch dichte Anordnung des Einstichlochs 101' an der Schneidkontur 100' wird es zusätzlich möglich, mehrere Gutteilbereiche enger auf dem ursprünglichen Werkstück 2' zu verschachteln bzw. anzuordnen, wodurch sich eine vorteilhafte Materialersparnis ergibt.

In einer weiteren alternativen oder ergänzenden Verfahrensvariante werden die Bearbeitungsparameter während des in der Figur 4 gezeigten Verfahrensschritts A kontinuierlich geändert.

Dazu wird beispielsweise zu Beginn des Einstechens des Laserstrahls 6 in ein Aluminium-Werkstück 2 mit einer Dicke von 8mm, d.h. zu Beginn des Verfahrensschritts A, ein vertikaler Abstand der Schneidgasdüse 8 zum Werkstück 2 (ADW) von 10mm eingestellt. Die Fokuslage FL relativ zur Mündung der Schneidgasdüse 8 gemessen beträgt in diesem Ausführungsbeispiel -10mm. Mit anderen Worten liegt der Fokus des Laserstrahls 6 auf der Werkstückoberfläche des Werkstücks 2'. Die Laserleistung beträgt 3500 W (gepulst) und der Schneidgasdruck 0,6 bar. Zusätzlich kann aus einer am Schneidkopf 5 angeordneten Querblasdüse (nicht gezeigt) ein weiterer Gasstrom unter einem Winkel zum Laserstrahl 6 auf das Werkstück gerichtet sein, um den Schneidkopf 5 vor Spritzern und Rauch zu schützen.

Während der Ausbildung des Einstichlochs 101' im Verfahrensschritt A wird der Schneidkopf 5 senkrecht nach unten bewegt, bis am Ende des Einstechens der für das anschließende Schneiden der Kontur 100' geeignete Abstand zwischen der Schneidgasdüse 8 und der Werkstückoberfläche erreicht ist, der vorzugsweise zwischen 0,2mm und 5mm liegt. Gleichzeitig wird der Gasdruck des Schneidgases 7 kontinuierlich auf 10 bar erhöht, die Fokuslage FL relativ zur Schneidgasdüse 8 angehoben und die Laserleistung auf 8000 W (CW) gesteigert. Am Ende des Verfahrensschritts A wird der zusätzliche Gasstrom (diskret) ausgeschaltet.

Mit den am Ende des Verfahrensschritts A erreichten Bearbeitungsparametern (Schneidparametern) wird entlang einer möglichst kurzen Strecke in die Schneidkontur 100' eingefahren. Alternativ kann bei Aufwurf-freiem Einstechen und/oder einem Fokusdurchmesser beim Einstechen, der kleiner ist als die Schnittspaltbreite B, das Einstichloch auf bzw. innerhalb der Schneidkontur 100' angeordnet sein.

In einer Kombination der beschriebenen Verfahren werden ausgewählte Bearbeitungsparameter während des Verfahrensschritts A und dieselben oder andere Bearbeitungsparameter auf einer Umschaltstrecke 107' kontinuierlich geändert. Es werden beispielsweise der Abstand (ADW) zwischen der Schneidgasdüse 8 und der Werkstückoberfläche, der Schneidgasdruck, und die Fokuslage FL während des Verfahrensschritts A, d.h. während des Einstechens, kontinuierlich geändert. Auf der Umschaltstrecke 107' erfolgt dann eine kontinuierliche Änderung der Laserleistung, der Schneidgeschwindigkeit v, des Fokusdurchmessers und der Fokuslage FL. Mit dieser Verfahrensvariante können die für die Umstellung von Einstech- auf Schneidparameter benötigte Zeitdauer und Wegstrecke minimiert werden.

Je nach Materialart und -stärke des zu schneidenden Werkstücks kann es notwendig sein, zwischen dem Einstichloch 101' und der Umschaltstrecke 107' eine Anfahrstrecke 105' vorzusehen. In diesem Fall sind am Ende des Verfahrensschritts A Anfahr-Parameter erreicht, mit denen im Verfahrensschritt B der Schneidprozess begonnen wird. Der anschließende Verfahrensschritt C für die Änderung der Bearbeitungsparameter bis zum Erreichen von Schneidparameter-Werten beginnt mit Erreichen der Umschaltstrecke 107' (Figur 3), d. h. mit Erreichen der Anfangsposition 106'.

So kann beispielsweise zu Beginn des Einstechens der Abstand ADW zwischen der Schneidgasdüse 8 und der Werkstückoberfläche 10mm sowie die Fokuslage FL relativ zur Mündung der Schneidgasdüse 8 einen Wert von -10mm aufweisen. Am Ende des Verfahrensschritts A beträgt der Abstand ADW zwischen Schneidgasdüse 8 und Werkstückoberfläche 4 mm, die Fokuslage FL beträgt -2,5mm. Auf der Anfahrstrecke wird der Schneidkopf mit einer Schneidgeschwindigkeit von 1,8m/min bewegt. Auf der Umschaltstrecke 107' wird der Abstand ADW zwischen Schneidgasdüse 8 und Werkstückoberfläche auf 1mm reduziert, die Fokuslage FL von -2,5 mm auf -6,5 mm verschoben und die Schneidgeschwindigkeit auf 2,8m/min erhöht. Spätestens am Endpunkt 108' der Umschaltstrecke 107' sind diese Schneidwerte der Bearbeitungsparameter erreicht, so dass das Schneiden der Schneidkontur 100, 100' im Verfahrensschritt D mit diesen Werten erfolgen kann.

## Patentansprüche

1. Verfahren zum Schneiden eines, vorzugsweise plattenförmigen und/oder metallischen, Werkstücks (2, 2') entlang einer vorgebbaren Schneidkontur (100, 100') mittels eines Laserstrahls (6) und eines aus einer Düse (8) austretenden Schneidgases (7), wobei der Laserstrahl (6) in das Werkstück (2, 2') zur Ausbildung eines Einstichlochs (101, 101') zumindest teilweise neben der Schneidkontur (100, 100') einsticht,
wobei auf einer Umschaltstrecke (107'), die direkt am Einstichloch (101, 101') oder an einem zwischen dem Einstichloch (101, 101') und der Schneidkontur (100, 100') liegenden Anfangspunkt (106') beginnt und an einem auf der Schneidkontur (100, 100') liegenden Endpunkt (108') endet und die sich in die Schneidkontur (100, 100') hinein erstreckt, mindestens ein Bearbeitungsparameter kontinuierlich verändert wird, **dadurch gekennzeichnet, dass** als Bearbeitungsparameter die Fokuslage (FL) des Laserstrahls (6) auf der Umschaltstrecke (107') relativ zu der Düse (8) in Richtung Werkstück (2, 2') kontinuierlich verändert wird.

2. Verfahren nach Anspruch 1, **dadurch gekennzeichnet, dass** während der Ausbildung des Einstichlochs (101, 101') mindestens zwei Bearbeitungsparameter kontinuierlich verändert werden.

3. Verfahren nach einem der vorhergehenden Ansprüche, **dadurch gekennzeichnet, dass** die Bearbeitungsparameter linear geändert werden.

4. Verfahren nach einem der vorhergehenden Ansprüche, **dadurch gekennzeichnet, dass** die Schneidgeschwindigkeit (v) auf der Umschaltstrecke (107') erhöht wird.

5. Verfahren nach einem der vorhergehenden Ansprüche, **dadurch gekennzeichnet, dass** der Abstand Düse-Werkstück (ADW) während der Ausbildung des Einstichlochs (101, 101') und/oder auf der Umschaltstrecke (107') verringert wird.

6. Verfahren nach einem der vorhergehenden Ansprüche, **dadurch gekennzeichnet, dass** die Laserleistung des Laserstrahls (6) und/oder der Druck des Schneidgases (7) während der Ausbildung des Einstichlochs (101, 101') und/oder auf der Umschaltstrecke (107') erhöht werden.

7. Verfahren nach einem der vorhergehenden Ansprüche, **dadurch gekennzeichnet, dass** der Abstand des Einstichlochs (101, 101') zur Schneidkontur (100, 100') der Schnittspaltbreite entspricht.

8. Verfahren nach einem der vorhergehenden Ansprüche, **dadurch gekennzeichnet, dass** nach dem Einstechen und vor dem Anfahren aus dem Einstichloch (101, 101') der Abstand Düse-Werkstück (ADW) vergrößert und die Fokuslage (FL) vom Werkstück (2, 2') in Richtung Düse (8) verstellt wird.

## Claims

1. Method for cutting a preferably plate-like and/or metal workpiece (2, 2') along a predeterminable cutting contour (100, 100') using a laser beam (6) and a cutting gas (7) which is discharged from a nozzle (8), wherein the laser beam (6) penetrates into the workpiece (2, 2') in order to form a penetration hole (101, 101') at least partially beside the cutting contour (100, 100'),
wherein on a switching path (107'), which starts directly at the penetration hole (101, 101') or at a starting point (106') which is located between the penetration hole (101, 101') and the cutting contour (100, 100') and ends at an end point (108') located on the cutting contour (100, 100'), and extends into the cutting contour (100, 100'), at least one processing parameter is/are continuously changed, **characterized in that** as a processing parameter, the focal position (FL) of the laser beam (6) on the switching path (107') is continuously changed relative to the nozzle (8) in the direction of the workpiece (2, 2').

2. Method according to claim 1, **characterized in that** during the formation of the penetration hole (101, 101'), at least two processing parameters are continuously changed.

3. Method according to any one of the preceding claims, **characterised in that** the processing parameters are changed in a linear manner.

4. Method according to any one of the preceding claims, **characterised in that** the cutting speed (v) is increased on the switching path (107').

5. Method according to any one of the preceding claims, **characterised in that** the spacing of the nozzle/workpiece (ADW) is decreased during the formation of the penetration hole (101, 101') and/or on the switching path (107').

6. Method according to any one of the preceding claims, **characterised in that** the laser power of the laser beam (6) and/or the pressure of the cutting gas (7) is/are increased during the formation of the penetration hole (101, 101') and/or on the switching path (107').

7. Method according to any one of the preceding claims, **characterised in that** the spacing between the penetration hole (101, 101') and the cutting contour (100, 100') corresponds to the cutting gap width.

8. Method according to any one of the preceding claims, **characterised in that**, after the penetration and before the start-up from the penetration hole (101, 101'), the spacing of the nozzle/workpiece (ADW) is increased and the focal position (FL) is adjusted from the workpiece (2, 2') in the direction of the nozzle (8).

## Revendications

1. Procédé de découpage au moyen d'un faisceau laser (6) et d'un gaz de découpage (7) sortant d'une buse (8), le long d'un profil de découpage (100, 100') pouvant être préétabli, d'une pièce (2, 2') préférentiellement en forme de plaque et/ou métallique, ledit faisceau laser (6) venant mordre dans ladite pièce (2, 2'), au moins partiellement à côté dudit profil de découpage (100, 100'), en vue de former un trou d'entaillage (101, 101'),
sachant qu'au moins un paramètre d'usinage est modifié en continu sur un trajet de commutation (107') qui débute directement au niveau du trou d'entaillage (101, 101') ou en un point initial (106') interposé entre ledit trou d'entaillage (101, 101') et le profil de découpage (100, 100'), s'achève en un point final (108') situé sur ledit profil de découpage (100, 100'), et pénètre dans ledit profil de découpage (100, 100'), **caractérisé par le fait que** la position focale (FL) du faisceau laser (6) est modifiée en continu par rapport à la buse (8) sur le trajet de commutation (107'), dans la direction de la pièce (2, 2'), en tant que paramètre d'usinage.

2. Procédé selon la revendication 1, **caractérisé par le fait qu'**au moins deux paramètres d'usinage sont modifiés en continu au cours de la formation du trou d'entaillage (101, 101').

3. Procédé selon l'une des revendications précédentes, **caractérisé par le fait que** les paramètres d'usinage sont modifiés linéairement.

4. Procédé selon l'une des revendications précédentes, **caractérisé par le fait que** la vitesse de découpage (v) est accrue sur le trajet de commutation (107').

5. Procédé selon l'une des revendications précédentes, **caractérisé par le fait que** la distance buse-pièce (ADW) est réduite au cours de la formation du trou d'entaillage (101, 101'), et/ou sur le trajet de commutation (107').

6. Procédé selon l'une des revendications précédentes, **caractérisé par le fait que** la puissance du faisceau laser (6) et/ou la pression du gaz de découpage (7) est (sont) accrue(s) au cours de la formation du trou d'entaillage (101, 101'), et/ou sur le trajet de commutation (107').

7. Procédé selon l'une des revendications précédentes, **caractérisé par le fait que** la distance, comprise entre le trou d'entaillage (101, 101') et le profil de découpage (100, 100'), correspond à la largeur de l'interstice de coupe.

8. Procédé selon l'une des revendications précédentes, **caractérisé par le fait qu'**à l'issue de l'entaillage et préalablement à l'amorce de sortie hors du trou d'entaillage (101, 101'), la distance buse-pièce (ADW) est accrue et la position focale (FL) est réglée, à partir de ladite pièce (2, 2'), dans la direction de ladite buse (8).
